(19) Europäisches Patentamt European Patent Office Office européen des brevets

(11) **EP 3 073 605 A2**

(12) **EUROPEAN PATENT APPLICATION**

(43) Date of publication:
**28.09.2016 Bulletin 2016/39**

(51) Int Cl.:
***H02J 9/06*** (2006.01)     ***G06F 1/30*** (2006.01)
***H02J 7/34*** (2006.01)

(21) Application number: **16162273.3**

(22) Date of filing: **24.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.03.2015 CN 201510140080**

(71) Applicant: **Tsann Kuen (Zhangzhou) Enterprise Co., Ltd.**
**Fujian 363107 (CN)**

(72) Inventor: **Han, Yafei**
**363107 Zhangzhou Fujian (CN)**

(74) Representative: **V.O.**
**P.O. Box 87930**
**Carnegieplein 5**
**2508 DH Den Haag (NL)**

(54) **STORAGE DEVICE AND RECOVERABLE SYSTEM FOR STORING OPERATION DATA OF AN ELECTRONIC DEVICE**

(57) A storage device (1) is provided to store operation data of an electronic device (2) when the electronic device (2) experiences interruption of electric power. The storage device (1) includes a processing module (13) for storing the operation data, a switch module (11) for outputting a charging voltage signal associated with a DC voltage signal, and an energy storage module (12) charged by the charging voltage signal. The energy storage module (12) outputs a determination voltage signal to the processing module (13) in absence of the charging voltage signal. Further, the processing module (13) converts the determination voltage signal into a digital value, and determines whether to read the operation data according to the digital value upon recovery of the electric power from the interruption.

FIG.2

EP 3 073 605 A2

**Description**

The disclosure relates to a storage device and a recoverable system, and more particularly to a storage device and a recoverable system including the storage device for storing operation data of an electronic device for recovery of the electronic device from a power interruption.

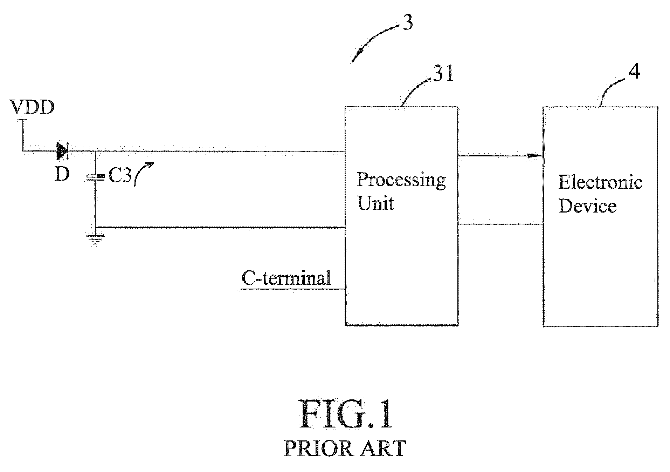

Figure 1 illustrates a recoverable system including an electronic device 4, and a conventional storage device 3 for recovery of the electronic device 4 from power failure of the recoverable system. The conventional storage device 3 includes a capacitor C3 and a processing unit 31 (e.g., a microprocessor control unit (MCU)). The processing unit 31 includes a random access memory therein, and the capacitor C3 is utilized to provide electricity to the processing unit 31 during the power failure, such that the memory of the processing unit 31 can maintain operation data of the electronic device 4 stored therein before occurrence of the power failure. Accordingly, upon recovery from the power failure of the recoverable system, the electronic device 4 can recover and operate in an original state, which is a state the electronic device 4 was previously in before the power failure, using the operation data stored in the memory of the processing unit 31.

When a power failure occurs, the processing unit 31 detects the power failure at a C-terminal, and the time for completing the detection is, for example, T1. Upon detecting the power failure, the processing unit 31 is turned off, and the time it takes for turning off the processing unit 31 is, for example, T2. It is assumed that the electricity remained in the capacitor C3 as of turning off of the processing unit 31 for maintaining the operation data stored in the memory can last for at most a duration of T3. When the recoverable system is recovered from the power failure, the capacitor C3 is charged to a voltage value greater than a default value, and then the processing unit 31 is turned on and operates to read the operation data stored in the memory so as to restore operation of the electronic device 4 back in the original state using the operation data.

The memory of the processing unit 31 must maintain the operation data for a duration of T which is equal to the summation of T1, T2 and T3 (i.e., T = T1 + T2 + T3) and affected by the capacity of the capacitor C3. Since the processing unit 31 operates in a non-low power state during T1 and T2, consumption during T1 and T2 of electricity provided by the capacitor C3 is relatively great, and thus the duration T3 may be short. If it is required to increase T3, T1 must be reduced and the operation of the processing unit 31 may consequently become inaccurate.

Therefore, an object of the disclosure is to provide a storage device that can alleviate at least one of the drawbacks of the prior art.

According to the disclosure, the storage device is configured to be electrically connected to an electronic device for storing, when the electronic device experiences interruption of electric power, operation data of the electronic device before the interruption of the electric power. The storage device includes a processing module configured to output a control signal according to condition of the electric power, a switch module, and an energy storage module.

The switch module includes an input terminal for receiving a DC voltage signal, a control terminal electrically connected to the processing module for receiving the control signal therefrom, and an output terminal. The switch module is operable according to the control signal to output at the output terminal a charging voltage signal that is associated with the DC voltage signal.

The energy storage module is electrically connected to the processing module and the output terminal of the switch module, and is configured to be charged by the charging voltage signal received from the switch module and to output a determination voltage signal to the processing module in absence of the charging voltage signal.

The processing module includes a converter for converting the determination voltage signal into a digital value, a nonvolatile memory electrically connected to the converter, and a processor electrically connected to the nonvolatile memory.

The nonvolatile memory is configured to store the digital value, and to store operation data of the electronic device before the interruption of the electric power when the system experiences the interruption of the electric power.

The processor is configured to read the digital value from the nonvolatile memory upon recovery of the electric power from the interruption, and to determine whether to read the operation data from the nonvolatile memory according to the digital value.

Other features and advantages of the disclosure will become apparent in the following detailed description of the embodiment with reference to the accompanying drawings, of which:

Figure 1 is a schematic block diagram of a recoverable system including a conventional storage device;
Figure 2 is a schematic block diagram of the embodiment of the recoverable system according to the disclosure;
Figure 3 is a timing diagram for illustrating operation of the recoverable system in response to interruption of electric power; and
Figure 4 is a flow chart illustrating a recovery procedure for recovering an electronic device of the recoverable system according to an embodiment of this disclosure.

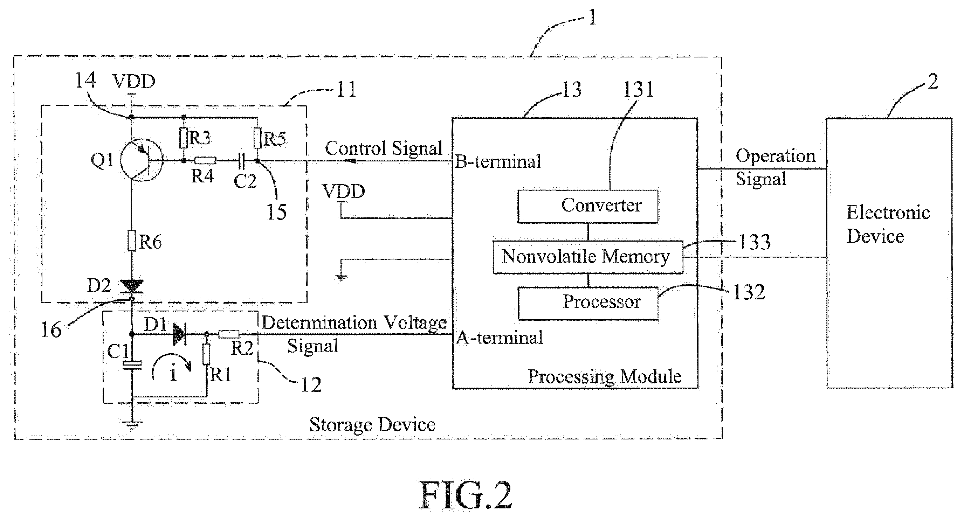

Referring to Figure 2, the embodiment of a recoverable system according to this disclosure is capable of storing operation data before interruption of electric power. The recoverable system includes an electronic device 2 and a storage device 1. The storage device 1 is electrically connected to the electronic device 2, and includes a switch module 11, an energy storage module 12 and a processing module 13.

The switch module 11 includes an input terminal 14 for receiving a DC voltage signal (VDD), a control terminal 15 electrically connected to the processing module 13 for receiving a control signal therefrom, and an output terminal 16. The switch module 11 is operable according to the control signal to switch between a turn-on state, in which the switch module 11 outputs at the output terminal 16 a charging voltage signal that is associated with the DC voltage signal (VDD), and a turn-off state, in which the switch module 11 does not output the charging voltage signal.

The energy storage module 12 is electrically connected to the processing module 13 and the output terminal 16 of the switch module 11, and is configured to be charged by the charging voltage signal received from the switch module 11 and to output a determination voltage signal to the processing module 13 in absence of the charging voltage signal. The determination voltage signal outputted by the energy storage module 12 changes with andpositively correlates to the charging voltage signal from the switch module 11.

In this embodiment, the energy storage module 12 includes an electrolytic capacitor C1, a first diode D1, a first resistor R1 and a second resistor R2. The electrolytic capacitor C1 is electrically connected between the output terminal 16 of the switch module 11 and ground. The first diode D1 has an anode electrically connected to the output terminal 16 of the switch module 11, and a cathode. The first resistor R1 is electrically connected between the cathode of the first diode D1 and ground. The second resistor R2 is electrically connected between the cathode of the first diode D1 and the processing module 13 for outputting the determination voltage signal to the processing module 13.

The switch module 11 further includes a transistor Q1, a capacitor C2, a second diode D2, a third resistor R3, a fourth resistor R4,a fifth resistor R5 and a sixth resistor R6. The transistor Q1 has a first terminal electrically connected to the input terminal 14, a second terminal and a third terminal. The capacitor C2 is electrically connected between the third terminal of the transistor Q1 and the control terminal 15. The second diode D2 has an anode electrically connected to the second terminal of the transistor Q1, and a cathode electrically connected to the output terminal 16. The third resistor R3 is electrically connected between the first and third terminals of the transistor Q1. The fourth resistor R4 is electrically connected between the capacitor C2 and the third terminal of the transistor Q1. The fifth resistor R5 is electrically connected between the first terminal of the transistor Q1 and the control terminal 15. The sixth resistor R6 is electrically connected between the second terminal of the transistor Q1 and the anode of the diode D2.

For example, the transistor Q1 is a PNP bipolar junction transistor, and the first, second and third terminals thereof are emitter, collector and base terminals, respectively.

The processing module 13 is configured to receive the determination voltage signal at an A-terminal, and to output the control signal at a B-terminal according to condition of the electric power. The processing module 13 includes a converter 131, a processor 132 and a nonvolatile memory 133. The converter 131 converts the determination voltage signal into a digital value. The nonvolatile memory 133 is electrically connected to the converter 131, and is configured to store the digital value, and to store, when the system experiences an interruption of the electric power, operation data of the electronic device 2 before the interruption of the electric power. For example, the nonvolatile memory 133 is, but not limited to, an electrically erasable programmable read only memory (EEPROM). The processor 132 is electrically connected to the nonvolatile memory 133, and is configured to read the digital value from the nonvolatile memory 133 upon recovery of the electric power from the interruption, and to determine whether to read the operation data from the nonvolatile memory 133 according to the digital value. The processor 132 is further configured to generate an operation signal according to the operation data to make the electronic device 2 operate in an operation state the electronic device 2 was in before the interruption of the electric power, be it a standby state or a working state.

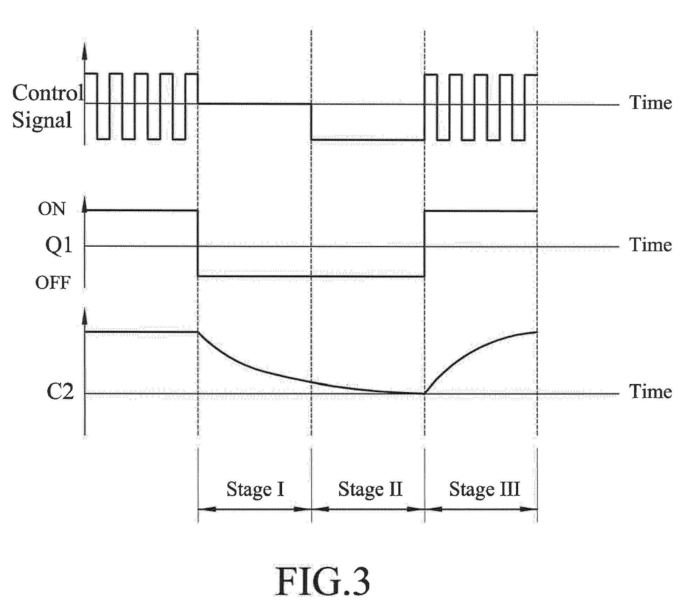

Further referring to Figure 3, operation of the storage device 1 of the recoverable system in response to the interruption of the electric power includes three stages, i.e., stage I, II and III.

When the electric power is normal, the processing module 13 outputs a periodic square wave having a frequency of, for example, 4 KHz as the control signal, which makes the switch module 11 operate in the turn-on state. Therefore, the transistor Q1 receives the DC voltage signal (VDD), and the switch module 11 outputs the charging voltage signal at the output terminal 16. The electrolytic capacitor C1 of the energy storage module 12 receives the charging voltage signal, and is fully charged by the charging voltage signal.

When the interruption of the electric power occurs (stage I), the processing module 13 outputs at the B-terminal the control signal having continuously high level to make the switch module 11 operate in the turn-off state, in which the switch module 11 does not output the charging voltage signal at the output terminal 16. Because of not receiving the charging voltage signal from the switch module 11, the electrolytic capacitor C1 discharges exponentially, and generates a discharge current (i). Since the discharge current (i) flows through the first diode D1 and the first resistor R1, a discharging duration in which the electrolytic capacitor C1 discharges the discharge current (i) can be adjusted by changing resistance of the first resistor R1. In particular, the discharging duration is substantially equal to a duration in which the storage device 1 can normally operate during the interruption of the electrical power.

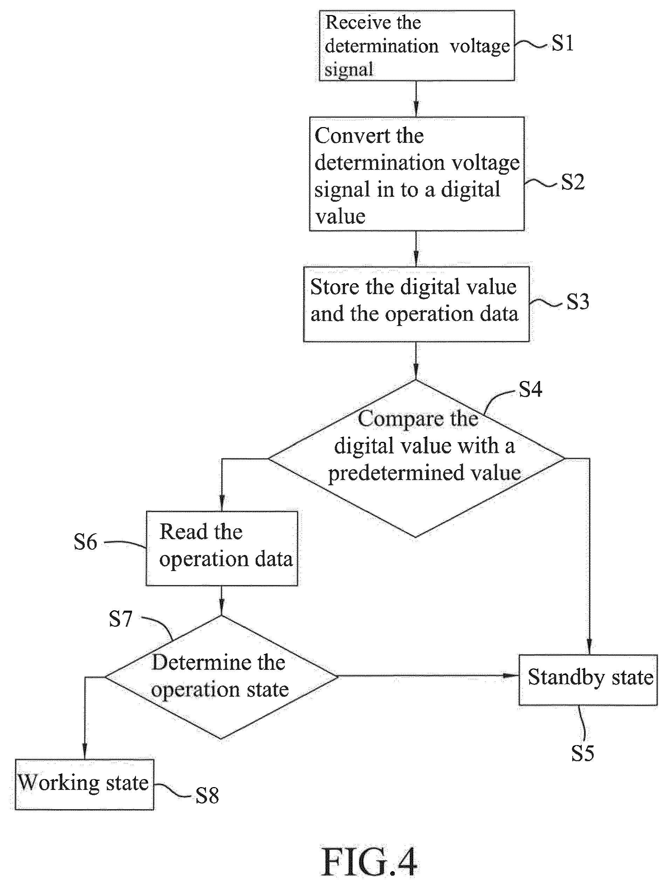

When the electric power recovers (stage II), the processing module 13 outputs at the B-terminal the control signal having continuously low level. The control signal having continuously low level still makes the switch module 11 operate in the turn-off state, and the electrolytic capacitor C1 continues to discharge. In stage II, the processing module 13 receives the determination voltage signal at the A-terminal from the energy storage module 12, and the converter 131 converts the determination voltage signal into a digital value, and the nonvolatile memory 133 stores the digital value to be used in a recovery procedure shown in Figure 4.

When the electric power is still normal (stage III), the processing module 13 outputs at the B-terminal the periodic square wave as the control signal. For example, when detecting that the electric power is normal for a predetermined time length, the processing module 13 outputs the periodic square wave. In stage III, the control signal makes the switch module 11 operate in the turn-on state, and the electrolytic capacitor C1 stops discharging and is charged by the charging voltage signal received from the output terminal 16 of the switch module 11. Further, the processing module 13 ignores the determination voltage signal from the energy storage module 12, and the electronic device 2 operates in one of the standby state and the working state according to the operation signal from the processing module 13.

The processor 132 is configured to implement, after stage II, the recovery procedure of Figure 4 for determining to recover the electronic device 2 back to the standby state or the working state.

In step S1, the processing module 13 receives the determination voltage signal from the energy storage module 12.

In step S2, the converter 131 converts the determination voltage signal into a digital value. It is assumed that the DC voltage signal (VDD) is 5 V, and the converter 131 is, but not limited to, an 8-bit converter. Accordingly, the digital value is equal to $VDD/2^8$. For example, when the determination voltage signal received by the processing module 13 is 0.1953125 V, the converter 131 converts the determination voltage signal into the digital value based on the following equations:

$$5:256=0.195325:X, \text{ and}$$

$$X=10,$$

where X serves as the digital value.

In step S3, the digital value is stored in the nonvolatile memory 133.

In step S4, the processor 132 compares the digital value with the predetermined value, and determines whether the digital value is greater than or equal to the predetermined value. It should be noted that the predetermined value is set arbitrarily. The flow goes to step S5 when the digital value is smaller than the predetermined value, and goes to step S6 when the digital value is greater than or equal to the predetermined value.

In step S5, the processor 132 generates the operation signal to make the electronic device 2 operate in the standby state.

In step S6, the processor 132 reads the operation data from the nonvolatile memory 133. Then, in step S7, the processor 132 determines whether the operation data is associated with the standby state or the working state. The flow goes to step S5 when the operation data is associated with the standby state, and goes to step S8 when the operation data is associated with the working state.

In step S8, the processor 132 generates the operation signal according to the operation data to make the electronic device 2 operate in the working state.

To sum up, in the storage device 1 according to this disclosure, the nonvolatile memory 133 (e.g., EEPROM) can maintain the operation data even when there is no electricity supplied to the storage device 1, and is more reliable than a random access memory used in a conventional storage device. In addition, the discharging duration of the electrolytic capacitor C1 can be adjusted by changing the resistance of the first resistor R1, and thus, the duration in which the nonvolatile memory 133 can maintain the operation data is adjustable. Further, upon the interruption of the electrical power, it is not required to turn off the processing module 13. Furthermore, the processing module 13 outputs the control signal to the switch module 11 at the B-terminal, and the switch module 11 operates according to the control signal to make the electrolytic capacitor C1 discharge or be charged. Thus, operation of the storage device 1 is relatively accurate.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

**Claims**

1. A storage device (1) **characterized by**:

an energy storage module (12) configured to output a determination voltage signal;

a processing module (13) electrically connected to said energy storage module (12) for receiving the determination voltage signal therefrom, and being operable to determine the determination voltage signal and to generate a control signal according to determination result on the determination voltage signal; and

a switch module (11) electrically connected to said energy storage module (12) and said processing module (13), and configured to charge said energy storage module (12) in response to receipt of the control signal.

2. The storage device (1) as claimed in Claim 1, **characterized in that**:

said storage device (1) is configured to be electrically connected to an electronic device (2) for storing, when the electronic device (2) experiences interruption of electric power, operation data of the electronic device (2) before the interruption of the electric power;

said switch module (11) includes an input terminal (14) for receiving a DC voltage signal, a control terminal (15) electrically connected to said processing module (13) for receiving the control signal therefrom, and an output terminal (16), and said switch module (11) is operable according to the control signal to output at said output terminal (16) a charging voltage signal that is associated with the DC voltage signal;

said energy storage module (12) is configured to be charged by the charging voltage signal received from said switch module (11) and to output the determination voltage signal to said processing module (13) in absence of the charging voltage signal; and

said processing module (13) is configured to store the operation data of the electronic device (2) before the interruption of the electric power, and is operable to convert the determination voltage signal into a digital value and to determine whether to read the operation data according to the digital value.

3. The storage device (1) as claimed in Claim 2, **characterized in that** said energy storage module (12) includes:

an electrolytic capacitor (C1) electrically connected between said output terminal (16) of said switch module (11) and ground;

a diode (D1) having an anode that is electrically connected to said output terminal (16) of said switch module (11), and a cathode;

a first resistor (R1) electrically connected between said cathode of said diode (D1) and ground; and

a second resistor (R2) electrically connected between said cathode of said diode (D1) and said processing module (13) for outputting the determination voltage signal to said processing module (13).

4. The storage device (1) as claimed in any one of Claims 2 and 3, **characterized in that** said switch module (11) further includes:

a transistor (Q1) having a first terminal electrically connected to said input terminal (14), a second terminal and a third terminal;

a capacitor (C2) electrically connected between said third terminal of said transistor (Q1) and said control terminal (15);

a diode (D2) having an anode that is electrically connected to said second terminal of said transistor (Q1), and a cathode that is electrically connected to said output terminal (16);

a third resistor (R3) electrically connected between said first and third terminals of said transistor (Q1);

a fourth resistor (R4) electrically connected between said capacitor (C2) and said third terminal of said transistor (Q1);

a fifth resistor (R5) electrically connected between said first terminal of said transistor (Q1) and said control terminal (15); and

a sixth resistor (R6) electrically connected between said second terminal of said transistor (Q1) and said anode of said diode (D2).

5. The storage device (1) as claimed in Claim 4, **characterized in that** said transistor (Q1) is a PNP bipolar junction transistor, and said first, second and third terminals are emitter, collector and base terminals, respectively.

6. The storage device (1) as claimed in any one of Claims 1 to 5, **characterized in that** said processing module (13) is configured to be electrically connected to an electronic device (2) for storing, when the electronic device (2) experiences interruption of electric power, operation data of the electronic device (2) before the interruption of the electric power, and said processing module (13) includes:

a converter (131) for converting the determination voltage signal into a digital value;

a nonvolatile memory (133) electrically connected to said converter (131), and configured to store the digital value and the operation data of the electronic device (2) before the interruption of the electric power; and

a processor (132) electrically connected to said nonvolatile memory (133), and configured to read the digital value from said nonvolatile memory (133) upon recovery of the electric power from the interruption, and to determine whether to read the operation data from said nonvolatile memory (133) according to the digital value.

7. The storage device (1) as claimed in Claim 6, **characterized in that** said processor (132) is further configured to compare the digital value with a predetermined value, and to make the electronic device (2) operate in a standby state when the digital value is smaller than the predetermined value.

8. The storage device (1) as claimed in Claim 7, **characterized in that** said processor (132) is further configured to read the operation data from said nonvolatile memory (133) when the digital value is greater than or equal to the predetermined value, to determine which one of the standby state and a working state the operation data before the interruption of the electric power is associated with, to make the electronic device (2) operate in the standby state when it is determined that the operation data is associated with the standby state, and to make the electronic device (2) operate in the working state when it is determined that the operation data is associated with the working state.

9. A recoverable system **characterized by**:

   an electronic device (2); and
   a storage device (1) electrically connected to said electronic device (2), and including

   an energy storage module (12) configured to output a determination voltage signal,
   a processing module (13) electrically connected to said energy storage module (12) for receiving the determination voltage signal therefrom, and being operable to determine the determination voltage signal and to generate a control signal according to determination result on the determination voltage signal, and
   a switch module (11) electrically connected to said energy storage module (12) and said processing module (13), and configured to charge said energy storage module (12) in response to receipt of the control signal.

10. The recoverable system as claimed in Claim 9, **characterized in that**:

   said storage device (1) is configured to store, when the electronic device (2) experiences interruption of electric power, operation data of the electronic device (2) before the interruption of the electric power;
said switch module (11) includes an input terminal (14) for receiving a DC voltage signal, a control terminal (15) electrically connected to said processing module (13) for receiving the control signal therefrom, and an output terminal (16), and said switch module (11) is operable according to the control signal to output at said output terminal (16) a charging voltage signal that is associated with the DC voltage signal;
said energy storage module (12) is configured to be charged by the charging voltage signal received from said switch module (11) and to output the determination voltage signal to said processing module (13) in absence of the charging voltage signal; and
said processing module (13) is configured to store the operation data of said electronic device (2) before the interruption of the electric power, and is operable to convert the determination voltage signal into a digital value and to determine whether to read the operation data according to the digital value.

11. The recoverable system as claimed in Claim 10, **characterized in that** said energy storage module (12) includes:

   an electrolytic capacitor (C1) electrically connected between said output terminal (16) of said switch module (11) and ground;
   a diode (D1) having an anode that is electrically connected to said output terminal (16) of said switch module (11), and a cathode;
   a first resistor (R1) electrically connected between said cathode of said diode (D1) and ground; and
   a second resistor (R2) electrically connected between said cathode of said diode (D1) and said processing module (13) for outputting the determination voltage signal to said processing module (13).

12. The recoverable system as claimed in any one of Claims 10 and 11, **characterized in that** said switch module (11) further includes:

   a transistor (Q1) having a first terminal electrically connected to said input terminal (14), a second terminal and a third terminal;
   a capacitor (C2) electrically connected between said third terminal of said transistor (Q1) and said control terminal (15);
   a diode (D2) having an anode that is electrically connected to said second terminal of said transistor (Q1), and a cathode that is electrically connected to said output terminal (16);
   a third resistor (R3) electrically connected between said first and third terminals of said transistor (Q1);

a fourth resistor (R4) electrically connected between said capacitor (C2) and said third terminal of said transistor (Q1);

a fifth resistor (R5) electrically connected between said first terminal of said transistor (Q1) and said control terminal (15); and

a sixth resistor (R6) electrically connected between said second terminal of said transistor (Q1) and said anode of said diode (D2).

**13.** The recoverable system as claimed in Claim 12, **characterized in that** said transistor (Q1) is a PNP bipolar junction transistor, and said first, second and third terminals are emitter, collector and base terminals, respectively.

**14.** The recoverable system as claimed in any one of Claims 9 to 13, **characterized in that** said processing module (13) is electrically connected to said electronic device (2) for storing, when said electronic device (2) experiences interruption of electric power, operation data of said electronic device (2) before the interruption of the electric power, and said processing module (13) includes:

a converter (131) for converting the determination voltage signal into a digital value;

a nonvolatile memory (133) electrically connected to said converter (131), and configured to store the digital value and the operation data of the electronic device (2) before the interruption of the electric power; and

a processor (132) electrically connected to said nonvolatile memory (133), and configured to read the digital value from said nonvolatile memory (133) upon recovery of the electric power from the interruption, and to determine whether to read the operation data from said nonvolatile memory (133) according to the digital value.

**15.** The recoverable system as claimed in Claim 14, **characterized in that** said processor (132) is further configured to compare the digital value with a predetermined value, and to make said electronic device (2) operate in a standby state when the digital value is smaller than the predetermined value.

**16.** The recoverable system as claimed in Claim 15, **characterized in that** said processor (132) is further configured to read the operation data from said nonvolatile memory (133) when the digital value is greater than or equal to the predetermined value, to determine which one of the standby state and a working state the operation data before the interruption of the electric power is associated with, to make said electronic device (2) operate in the standby state when it is determined that the operation data is associated with the standby state, and to make said electronic device (2) operate in the working state when it is determined that the operation data is associated with the working state.

**17.** A storage device (1) configured to be electrically connected to an electronic device (2) for storing, when the electronic device (2) experiences interruption of electric power, operation data of the electronic device (2) before the interruption of the electric power, said storage device (1) **characterized by**:

a processing module (13) configured to output a control signal according to condition of the electric power;

a switch module (11) including an input terminal (14) for receiving a DC voltage signal, a control terminal (15) electrically connected to said processing module (13) for receiving the control signal therefrom, and an output terminal (16), said switch module (11) being operable according to the control signal to output at said output terminal (16) a charging voltage signal that is associated with the DC voltage signal; and

an energy storage module (12) electrically connected to said processing module (13) and said output terminal (16) of said switch module (11), and configured to be charged by the charging voltage signal received from said switch module (11) and to output a determination voltage signal to said processing module (13) in absence of the charging voltage signal;

wherein said processing module (13) includes

a converter (131) for converting the determination voltage signal into a digital value,

a nonvolatile memory (133) electrically connected to said converter (131), and configured to store the digital value and the operation data of the electronic device (2) before the interruption of the electric power, and

a processor (132) electrically connected to said nonvolatile memory (133), and configured to read the digital value from said nonvolatile memory (133) upon recovery of the electric power from the interruption, and to determine whether to read the operation data from said nonvolatile memory (133) according to the digital value.

VDD

D C3

C-terminal

3

31 Processing Unit

4 Electronic Device

## FIG.1
PRIOR ART

FIG.2

EP 3 073 605 A2

FIG.3

Receive the determination voltage signal ~S1

Convert the determination voltage signal in to a digital value ~S2

Store the digital value and the operation data ~S3

Compare the digital value with a predetermined value ~S4

S6 — Read the operation data

S7 — Determine the operation state

Standby state ~S5

Working state ~S8

FIG.4